# EUROPÄISCHE PATENTSCHRIFT

(11) **EP 4 448 994 B1**
(45) Veröffentlichungstag und Bekanntmachung des Hinweises auf die Patenterteilung: **20.08.2025**
(21) Anmeldenummer: 22823123.9
(22) Anmeldetag: 13.12.2022
(51) Int. Cl.: F16K 15/06, B60S 1/56, F16L 57/00, E03B 7/10, F24D 19/00, G01F 15/10, F16K 27/02

(54) **RÜCKSCHLAGVENTIL UND VERWENDUNG DESSELBEN IN EINEM FLUIDSYSTEM**
CHECK VALVE AND USE THEREOF IN A FLUID SYSTEM
CLAPET ANTI-RETOUR ET UTILISATION ASSOCIÉE DANS UN SYSTÈME FLUIDIQUE

(30) Priorität: 17.12.2021 DE 102021214640
(43) Veröffentlichungstag der Anmeldung: 23.10.2024
(73) Patentinhaber: Schaeffler Technologies AG & Co. KG, 91074 Herzogenaurach (DE)
(72) Erfinder: FISCHER, Matthias, 80687 München (DE); GOETZE, Wolf, 80687 München (DE)
(74) Vertreter: Vitesco Technologies
(86) Internationale Anmeldenummer: PCT/EP2022/085627
(87) Internationale Veröffentlichungsnummer: WO 2023/110873

(56) Entgegenhaltungen:
- JP-A- S63 225 773

## Beschreibung

Die vorliegende Erfindung betrifft ein Rückschlagventil, das zur Verwendung in einem Fluidsystem vorgesehen ist, sowie eine Verwendung des Rückschlagventils in dem Fluidsystem, insbesondere in einem Fluidsystem eines Kraftfahrzeugs. Aus dem Stand der Technik bekannte Rückschlagventile weisen allgemein ein Vorspannelement auf, beispielsweise in Form einer Rückstellfeder, das dazu eingerichtet ist, ein Ventilglied mit einem Dichtelement bei Unterschreitung eines vorgegebenen, an einer Eingangsöffnung des Rückschlagventils anliegenden Eingangsdrucks mit einer derartigen Kraft in Richtung eines Dichtsitzes eines Ventilelements zu drücken, dass das Dichtelement in einer Schließstellung des Rückschlagventils an dem Dichtsitz anliegt und eine Durchgangsöffnung des Ventilelements verschließt. Bei Überschreiten des vorgegebenen Eingangsdrucks, der beispielsweise mittels einer Pumpe erzeugt wird, wird das Rückschlagelement in eine Offenstellung gebracht, indem durch die Kraft des Eingangsdrucks das Ventilglied entgegen der von dem Vorspannelement erzeugten Kraft in Richtung weg von dem Dichtsitz bewegt wird, wodurch die Durchgangsöffnung geöffnet wird.

Die Druckschrift JP S63 225773 A betrifft ein Rückschlagventil nach dem Oberbegriff des Anspruchs 1.

Eine Aufgabe einer Ausführung der vorliegenden Erfindung ist es, ein verbessertes Rückschlagventil bereitzustellen.

Diese Aufgabe wird durch ein Rückschlagventil mit den Merkmalen des Anspruchs 1 gelöst. Die Ansprüche 11 und 12 stellen die Verwendung des Rückschlagventils unter Schutz.

Nach einer Ausführung der vorliegenden Erfindung weist ein Rückschlagventil auf:
ein Gehäuse mit einem Grundkörper, der eine Eingangsöffnung aufweist,
einen Ventilkörper, der einen Durchlass aufweist, welcher eine Ausgangsöffnung aufweist, wobei der Ventilkörper wenigstens abschnittsweise in dem Grundkörper angeordnet und relativ zu dem Grundkörper axial verschiebbar ist,
ein wenigstens abschnittsweise in dem Ventilkörper und relativ zu dem Ventilkörper axial verschiebbar angeordnetes Ventilelement mit einer Durchgangsöffnung,
ein in dem Ventilkörper zwischen der Ausgangsöffnung und dem Ventilelement angeordnetes Ventilglied mit einem Dichtelement und einem Ventilschaft, der relativ zu dem Ventilkörper axial verschiebbar ist,
ein Vorspannelement, das dazu eingerichtet ist, das Ventilglied mit einer Vorspannkraft in Richtung des Ventilelements vorzuspannen, wobei das Rückschlagventil ferner aufweist:
   ein weiteres Vorspannelement, das dazu eingerichtet ist, das Ventilelement mit einer Vorspannkraft des weiteren Vorspannelements in Richtung des Ventilglieds vorzuspannen, und/oder
   ein anderes Vorspannelement, das dazu eingerichtet ist, den Ventilkörper mit einer Vorspannkraft des anderen Vorspannelements in Richtung der Eingangsöffnung vorzuspannen, wobei
   das Ventilelement einen die Durchgangsöffnung umgebenden Dichtsitz aufweist, der dem Dichtelement zugewandt ist, und
   in einer Schließstellung des Rückschlagventils das Dichtelement an dem Dichtsitz anliegt und die Durchgangsöffnung verschließt.

Hierbei können das Vorspannelement und/oder das weitere Vorspannelement und/oder das andere Vorspannelement beispielsweis als eine jeweilige Rückstellfeder, insbesondere Rückstellspiralfeder, ausgebildet sein. Dabei können die Vorspannkraft und die Vorspannkraft des weiteren Vorspannelements oder die Vorspannkraft und die Vorspannkraft des anderen Vorspannelements oder die Vorspannkraft und die Vorspannkraft des weiteren Vorspannelements und die Vorspannkraft des anderen Vorspannelements derart aufeinander abgestimmt sein, dass in einer stationären Schließstellung des Rückschlagventils bei einem unter einem vorgegebenen Eingangsdruck liegenden, an der Eingangsöffnung anliegenden Eingangsdruck eines Fluids, das beispielsweise aus einem Fluidreservoir der Eingangsöffnung über eine Zuleitung zur Eingangsöffnung mittels einer Pumpe zugeführt wird, eines Fluidsystem, in dem das Rückschlagventil verwendet wird, das Dichtelement an dem Dichtsitz anliegt und die Durchgangsöffnung verschließt. Hierbei sind die Vorspannkraft des weiteren Vorspannelements und/oder die Vorspannkraft des anderen Vorspannelements insbesondere derart gewählt, dass diese größer, insbesondere deutlich größer, als die Vorspannkraft sind.

Hierdurch kann in einer Ausführung, bei der das Rückschlagventil das weitere Vorspannelement enthält, im Falle eines Einfrierens eines in einer Ausgangsleitung, die mit der Ausgangsöffnung verbunden ist, enthaltenen Fluids, die durch das Einfrieren hervorgerufene Ausdehnung des Fluids kompensiert werden, indem das weitere Vorspannelement durch den Kontakt mit dem durch das Einfrieren in Richtung der Eingangsöffnung verschobenen Ventilelement entgegen der Vorspannkraft des weiteren Vorspannelements in Richtung der Eingangsöffnung zusammengedrückt wird. Dadurch kann eine Beschädigung des Rückschlagventils im Falle des Einfrierens verhindert werden.

Weiterhin kann hierdurch in einer Ausführung, bei der das Rückschlagventil das andere Vorspannelement enthält, im Falle eines Einfrierens und entsprechender Ausdehnung eines Fluids, das in dem Fluidreservoir und/oder einer entsprechenden Zuleitung zu der Eingangsöffnung des Rückschlagventils enthalten ist, das sich ausdehnende eingefrorene/einfrierende Fluid das Ventilelement sowie das Ventilglied zusammen mit dem Ventilkörper, beispielsweise im Falle, dass die axiale Verschiebung des Ventilschafts relativ zu dem Ventilkörper in Richtung der Ausgangsöffnung durch eine entsprechende Haltevorrichtung beschränkt ist, entgegen der durch das andere Vorspannelement aufgebrachten Vorspannkraft des anderen Vorspannelements in Richtung der Ausgangsöffnung drücken, wobei durch den Kontakt des Dichtsitzes mit dem Dichtelement dieses, zusammen mit dem Ventilteller und dem Ventilschaft, ebenfalls in Richtung der Ausgangsöffnung verschoben werden kann. Dadurch kann ebenfalls eine Beschädigung des Rückschlagventils im Falle des Einfrierens verhindert werden.

Nachdem das Fluid wieder aufgetaut ist, kann das Rückschlagventil in seine ursprüngliche Stellung zurückkehren.

Nach einer Ausführung ist der Ventilkörper radial gegenüber dem Grundkörper abgedichtet und/oder ist das Ventilelement radial gegenüber dem Ventilkörper abgedichtet.

Hierdurch kann in einer Ausführung verhindert werden, dass das Fluid in Richtung der Ausgangsöffnung strömt, sofern der Eingangsdruck kleiner als der vorgegebene Eingangsdruck ist.

Gemäß einer Ausführung weist das Gehäuse eine, insbesondere topfartige, Haltekappe mit einem Boden mit einer Öffnung auf.

Gemäß einer Ausführung weist das andere Vorspannelement ein erstes Ende, das an einem die Öffnung umgebenden Bereich des Bodens der Haltekappe abgestützt ist, und ein zweites Ende auf, das an einer axialen Stirnfläche des Ventilkörpers, insbesondere eines radial nach außen vorspringenden Abschnitts des Ventilkörpers, abgestützt ist; und/oder
weist die Haltekappe eine Wand auf, welche einen Abschnitt des Grundkörpers radial umgibt und/oder an diesem befestigt ist; und/oder
erstreckt sich ein Abschnitt des Ventilkörpers durch die Öffnung.

Gemäß einer Ausführung weist der Grundkörper einen, insbesondere topfartigen, Abschnitt mit einem Grundkörperboden, in dem die Eingangsöffnung vorgesehen ist, und/oder mit einem Wandabschnitt auf, der einen weiteren Abschnitt des Ventilkörpers radial umgibt.

Gemäß einer Ausführung weist das weitere Vorspannelement ein erstes Ende, das an einem die Eingangsöffnung umgebenden Bereich des Grundkörperbodens abgestützt ist, und ein zweites Ende auf, das an einem die Durchgangsöffnung des Ventilelements umgebenden und dem Grundkörperboden zugewandten Bereich des Ventilelements abgestützt ist.

Nach einer Ausführung weist das Vorspannelement ein erstes Ende, das an einem Ventilteller des Ventilglieds abgestützt ist, und ein zweites Ende auf, das an einem sich radial nach innen erstreckenden Abschnitt einer Innenwand des Ventilkörpers abgestützt ist.

Nach einer Ausführung ist das Ventilelement wenigstens teilweise in einem Aufnahmeraum des Ventilkörpers aufgenommen.

Nach einer Ausführung weist eine Innenwand des Aufnahmeraums einen sich radial nach innen erstreckenden Abschnitt auf, der dazu eingerichtet ist, die axiale Verschiebung des Ventilelements in Richtung der Ausgangsöffnung relativ zu dem Ventilkörper zu begrenzen.

Hierdurch kann in einer Ausführung zur Verhinderung der Beschädigung des Rückschlagventils weiter beigetragen werden.

Nach einer Ausführung ist das Rückschlagventil dazu eingerichtet, dass bei bestimmungsgemäßem Gebrauch in einer Offenstellung des Rückschlagventils ein Fluid sequentiell durch die Eingangsöffnung, die Durchgangsöffnung, den Durchlass und die Ausgangsöffnung strömt.

Nach einer Ausführung der Erfindung wird ein vorstehend beschriebenes Rückschlagventil in einem Fluidsystem, insbesondere eines Kraftfahrzeugs, verwendet.

Hierbei kann das Rückschlagventil in einem Fluidsystem zur Reinigung eines Sensors mittels eines Fluids verwendet werden.

Weitere Vorteile und Merkmale ergeben sich aus den Unteransprüchen und den Ausführungsbeispielen. Hierzu zeigt, teilweise schematisiert:
- Fig. 1: eine Querschnittsansicht eines Rückschlagventils gemäß einer Ausführung in einer Schließstellung,
- Fig. 2: eine Explosionsdarstellung der in Fig. 1 gezeigten Querschnittsansicht des Rückschlagventils,
- Fig. 3: eine Querschnittsansicht des in Fig. 1 gezeigten Rückschlagventils in einem Zustand, in dem ein Ventilkörper zusammen mit einem Ventilelement und einem Ventilglied, die in dem Ventilkörper aufgenommen sind, im Vergleich zu dem in Fig. 1 gezeigten Zustand nach rechts verschoben ist, und
- Fig. 4: eine Querschnittsansicht des in Fig. 1 gezeigten Rückschlagventils in einem Zustand, in dem das Ventilelement im Vergleich zu dem in Fig. 1 gezeigten Zustand nach links verschoben ist.

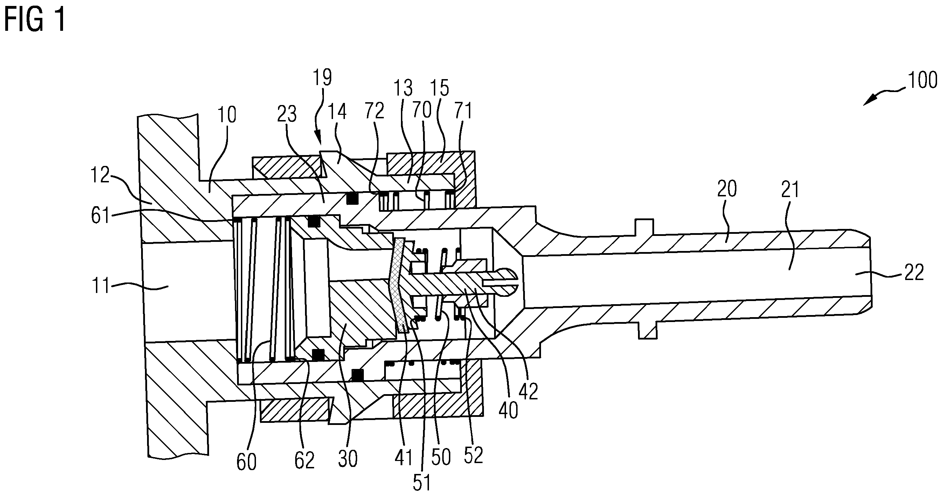

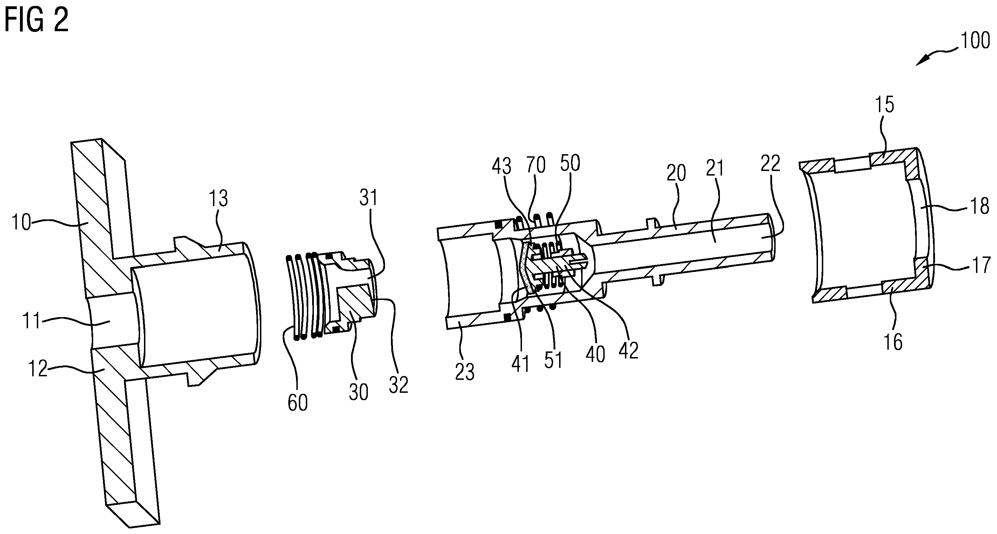

Fig. 1 zeigt eine Querschnittsansicht eines Rückschlagventils gemäß einer Ausführung in einer Schließstellung, und Fig. 2 zeigt eine Explosionsdarstellung der in Fig. 1 gezeigten Querschnittsansicht des Rückschlagventils.

Das Rückschlagventil 100 kann beispielsweise in einem nicht veranschaulichten Fluidsystem, insbesondere eines Kraftfahrzeugs, zur Reinigung eines Sensors mittels eines Fluids verwendet werden. Weiterhin kann das Rückschlagventil 100 in einem Fluidsystem verwendet werden, in dem das Fluid Urea ist oder zumindest enthält.

Das Rückschlagventil 100 weist ein Gehäuse mit einem Grundkörper 10 auf, der eine Eingangsöffnung 11 aufweist, welche dazu vorgesehen ist, mit einem nicht gezeigten Fluidreservoir, beispielsweise über eine Zuleitung, verbunden zu werden. Zwischen der Eingangsöffnung 11 und dem Fluidreservoir ist vorzugsweise eine nicht gezeigte Pumpe angeordnet, mit welcher das Fluid aus dem Fluidreservoir bei Bedarf zu der Eingangsöffnung 11 gepumpt wird, um einen von unter anderem der Leistung der Pumpe abhängigen Eingangsdruck des Fluids an der Eingangsöffnung 11 zu bewirken.

Das Rückschlagventil 100 weist ferner einen Ventilkörper 20 auf, der einen Durchlass 21 mit einer Ausgangsöffnung 22 aufweist, abschnittsweise in dem Grundkörper 10 angeordnet und relativ zu dem Grundkörper 10 axial verschiebbar angeordnet ist.

Hierbei weist der Grundkörper 10 insbesondere einen topfartigen Abschnitt mit einem Grundkörperboden 12, in dem die Eingangsöffnung 11 vorgesehen ist, und einen Wandabschnitt 13 auf, der wenigsten einen weiteren Abschnitt des Ventilkörpers 20 radial umgibt.

Das Gehäuse weist ferner eine topfartige Haltekappe 15 mit einer Wand 16, welche einen Abschnitt des Grundkörpers 10 radial umgibt und an diesem befestigt ist, und mit einem Boden 17 mit einer Öffnung 18 auf, durch die sich ein Abschnitt des Ventilkörpers 20 erstreckt. Die Befestigung der Haltekappe 15 an dem Abschnitt des Grundkörpers 10 kann beispielsweise mittels einer Schnappverbindung erfolgen, bei der die Haltekappe 15 wenigstens eine Einrasteinrichtung 19, beispielsweise in Form eines oder mehrerer Löcher, aufweist, und der Grundkörper 10 eine entsprechende Anzahl an Rastvorrichtungen 14, beispielsweise in Form von radialen Vorsprüngen aufweist, welche bei einem Überstülpen der Halteklappe 15 über den Grundkörper 10 in die entsprechenden Einrasteinrichtungen 19 einrasten.

In dem Ventilkörper 20 ist wenigstens abschnittsweise ein relativ zu dem Ventilkörper 20 axial verschiebbares Ventilelement 30 angeordnet, das eine Durchgangsöffnung 31 aufweist.

Zwischen der Ausgangsöffnung 22 und dem Ventilelement 30 ist in dem Ventilkörper 20 ferner ein Ventilglied 40 mit einem Dichtelement 41, das beispielsweise einen Gummi aufweist oder aus diesem gebildet ist, einem Ventilteller 43, an dem das Dichtelement 41 angeordnet ist, und einem Ventilschaft 42 angeordnet, der relativ zu dem Ventilkörper 20, insbesondere geführt durch einen Führungsabschnitt einer Innenwand des Ventilkörpers 20, axial verschiebbar ist.

Das Rückschlagventil 100 weist ferner ein Vorspannelement 50 auf, welches ein erstes Ende 51, das an einer zu der Ausgangsöffnung 22 weisenden Seite des Ventiltellers 43 des Ventilglieds 40 abgestützt ist, und ein zweites Ende 52 aufweist, das beispielsweise an einem sich radial nach innen erstreckenden Abschnitt der Innenwand des Ventilkörpers 20 abgestützt ist, um das Ventilglied 40 mit einer Vorspannkraft in Richtung des Ventilelements 30 vorzuspannen.

Das Rückschlagventil 100 weist zudem ein weiteres Vorspannelement 60 auf, welches ein erstes Ende 61, das an einem die Eingangsöffnung 11 umgebenden Bereich des Grundkörperbodens 12 abgestützt ist, und ein zweites Ende 62 aufweist, das an einem die Durchgangsöffnung 31 des Ventilelements 30 umgebenden und dem Grundkörperboden 12 zugewandten Bereich des Ventilelements 30 abgestützt ist, um das Ventilelement 30 mit einer Vorspannkraft des weiteren Vorspannelements 60 in Richtung des Ventilglieds 40 vorzuspannen.

Zusätzlich oder alternativ zu dem weiteren Vorspannelement 60 weist das Rückschlagventil 100 ein anderes Vorspannelement 70 auf, welches ein erstes Ende 71, das an einem die Öffnung 18 umgebenden Bereich des Bodens 17 der Haltekappe 15 abgestützt ist, und ein zweites Ende 72 aufweist, das an einer axialen Stirnfläche eines radial vorspringenden Abschnitts 23 des Ventilkörpers 20 abgestützt ist, um den Ventilkörper 20 mit einer Vorspannkraft des anderen Vorspannelements 70 in Richtung der Eingangsöffnung 11 vorzuspannen.

Das Ventilelement 30 weist einen die Durchgangsöffnung 31 umgebenden Dichtsitz 32 auf, der dem Dichtelement 41 zugewandt ist. In der in Fig. 1 veranschaulichten Schließstellung des Rückschlagventils 100 liegt das Dichtelement 41 an dem Dichtsitz 32 an und verschließt die Durchgangsöffnung 31, wenn der durch die Pumpe erzeugte Eingangsdruck und somit eine auf das Dichtelement 41 wirkende Kraft in Richtung der Ausgangsöffnung 22 unter einem vorgegebenen, durch die in die entgegengesetzte Richtung wirkende Vorspannkraft bestimmtem Eingangsdruckwert liegt.

Um zu verhindern, dass das Fluid in der Schließstellung des Rückschlagventils 100 von der Eingangsöffnung 11 zu der Ausgangsöffnung 22 strömt, sind der Ventilkörper 20 radial gegenüber dem Grundkörper 10 und das Ventilelement 30 radial gegenüber dem Ventilkörper 20 abgedichtet, beispielsweise durch nicht in den Fig. veranschaulichten weiteren Dichtelementen.

Wenn der durch die Pumpe erzeugte Eingangsdruck über dem vorgegebenen Eingangsdruckwert liegt, wird durch die entsprechende aufgebrachte Kraft das Ventilglied 40 zusammen mit dem Dichtelement 41 in Richtung der Ausgangsöffnung 22 in eine Offenstellung des Rückschlagventils 100 verschoben, so dass die Durchgangsöffnung 31 geöffnet wird und das Fluid von der Eingangsöffnung 11 über die Durchgangsöffnung 31 und den Durchlass 21 zu der Ausgangsöffnung 22 strömt.

Das Ventilelement 30 ist insbesondere wenigstens teilweise in einem Aufnahmeraum des Ventilkörpers 20 aufgenommen, wobei eine Innenwand des Aufnahmeraums einen sich radial nach innen erstreckenden Abschnitt 24 aufweist, der dazu eingerichtet ist, die axiale Verschiebung des Ventilelements 30 in Richtung der Ausgangsöffnung 22 relativ zu dem Ventilkörper 20 zu begrenzen.

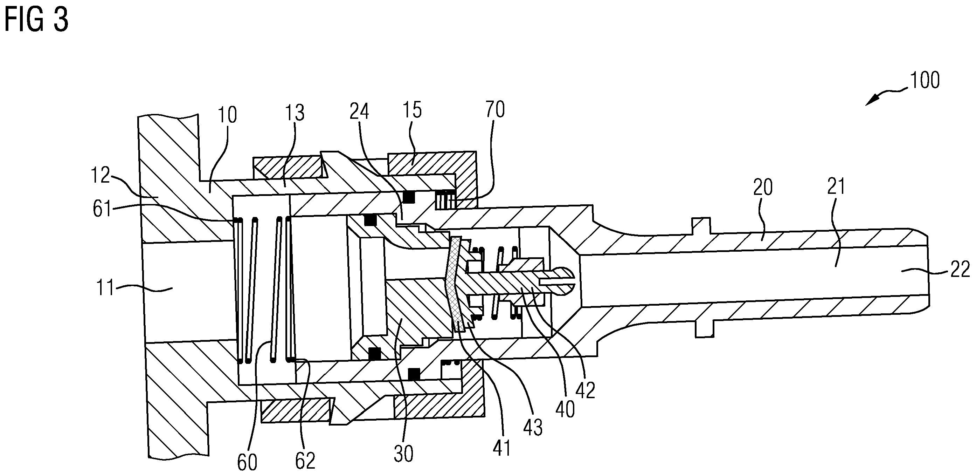

Fig. 3 zeigt eine Querschnittsansicht des in Fig. 1 gezeigten Rückschlagventils 100 in einem Zustand, in dem der Ventilkörper 20 zusammen mit dem Ventilelement 30 und dem Ventilglied 40, die in dem Ventilkörper 20 aufgenommen sind, im Vergleich zu dem in Fig. 1 gezeigten Zustand nach rechts verschoben ist.

Diese Verschiebung kann beispielsweise dadurch bewirkt sein, dass sich das durch die Eingangsöffnung 11 eintretende Fluid in Folge eines Einfrierens des Fluids in dem Fluidreservoir und/oder der entsprechenden Zuleitung zu dem Rückschlagventil 100 ausdehnt, und das sich ausdehnende eingefrorene/einfrierende Fluid das Ventilelement 30 nach rechts in Richtung der Ausgangsöffnung 22 drückt bzw. verschiebt, und, sobald ein Abschnitt des Ventilelements 30 an dem sich radial nach innen erstreckenden Abschnitt 24 anliegt, auch den Ventilkörper 20 entgegen der durch das andere Vorspannelement 70 aufgebrachten Vorspannkraft des anderen Vorspannelements 70 nach rechts in Richtung der Ausgangsöffnung 22 drückt bzw. verschiebt. Hierbei wird durch den Kontakt des Dichtsitzes 32 mit dem Dichtelement 41 letzteres, zusammen mit dem Ventilteller 43 und dem Ventilschaft 42, ebenfalls nach rechts in Richtung der Ausgangsöffnung 22 verschoben.

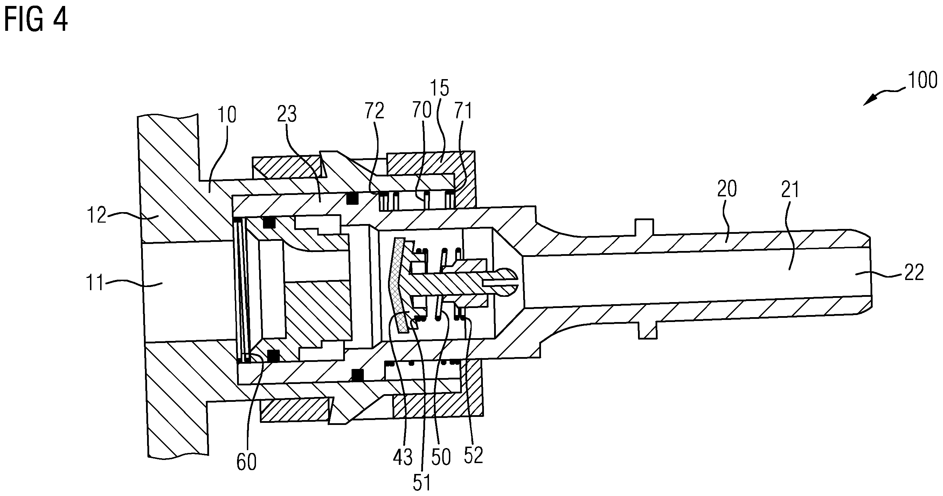

Fig. 4 zeigt eine Querschnittsansicht des in Fig. 1 gezeigten Rückschlagventils 100 in einem Zustand, in dem das Ventilelement 30 im Vergleich zu dem in Fig. 1 gezeigten Zustand nach links verschoben ist.

Diese Verschiebung kann beispielsweise dadurch bewirkt sein, dass sich ein durch die Ausgangsöffnung 22 von einer nicht gezeigten Ausgangsleitung des Rückschlagventils 100 eintretendes Fluid in Folge eines Einfrierens des Fluids in der Ausgangsleitung in Richtung zu dem Rückschlagventil 100 ausdehnt, und das sich ausdehnende eingefrorene/einfrierende Fluid das Ventilelement 30 entgegen der durch das weitere Vorspannelement 60 aufgebrachten weiteren Vorspannkraft nach links in Richtung der Eingangsöffnung 11 drückt.

### Bezugszeichenliste

- 10: Grundkörper
- 11: Eingangsöffnung
- 12: Grundkörperboden
- 13: Wandabschnitt
- 14: Rastvorrichtung
- 15: Haltekappe
- 16: Wand
- 17: Boden
- 18: Öffnung
- 19: Einrastvorrichtung
- 20: Ventilkörper
- 21: Durchlass
- 22: Ausgangsöffnung
- 23: radial nach außen vorspringender Abschnitt
- 24: radial nach innen erstreckender Abschnitt
- 30: Ventilelement
- 31: Durchgangsöffnung
- 32: Dichtsitz
- 40: Ventilglied
- 41: Dichtelement
- 42: Ventilschaft
- 43: Ventilteller
- 50: Vorspannelement
- 51: erstes Ende des Vorspannelements
- 52: zweites Ende des Vorspannelements
- 60: weiteres Vorspannelement
- 61: erstes Ende des weiteren Vorspannelements
- 62: zweites Ende des weiteren Vorspannelements
- 70: anderes Vorspannelement
- 71: erstes Ende des anderen Vorspannelements
- 72: zweites Ende des anderen Vorspannelements
- 100: Rückschlagventil

## Patentansprüche

1. Rückschlagventil (100), aufweisend:
ein Gehäuse mit einem Grundkörper (10), der eine Eingangsöffnung (11) aufweist,
einen Ventilkörper (20), der einen Durchlass (21) mit einer Ausgangsöffnung (22) aufweist und der wenigstens abschnittsweise in dem Grundkörper (10) angeordnet ist,
ein wenigstens abschnittsweise in dem Ventilkörper (20) relativ zu dem Ventilkörper (20) axial verschiebbar angeordnetes Ventilelement (30) mit einer Durchgangsöffnung (31),
ein in dem Ventilkörper (20) zwischen der Ausgangsöffnung (22) und dem Ventilelement (30) angeordnetes Ventilglied (40) mit einem Dichtelement (41) und einem Ventilschaft (42), der relativ zu dem Ventilkörper (20) axial verschiebbar ist,
ein Vorspannelement (50), das dazu eingerichtet ist, das Ventilglied (40) mit einer Vorspannkraft in Richtung des Ventilelements (30) vorzuspannen, wobei das Rückschlagventil (100) ferner aufweist:
ein weiteres Vorspannelement (60), das dazu eingerichtet ist, das Ventilelement (30) mit einer weiteren Vorspannkraft in Richtung des Ventilglieds (40) vorzuspannen, und/oder
ein anderes Vorspannelement (70), das dazu eingerichtet ist, den Ventilkörper (20) mit einer anderen Vorspannkraft in Richtung der Eingangsöffnung (11) vorzuspannen, wobei
das Ventilelement (30) einen die Durchgangsöffnung (31) umgebenden Dichtsitz (32) aufweist, der dem Dichtelement (41) zugewandt ist, und
in einer Schließstellung des Rückschlagventils (100) das Dichtelement (41) an dem Dichtsitz (32) anliegt und die Durchgangsöffnung (31) verschließt,
**dadurch gekennzeichnet, dass**
der Ventilkörper (20) relativ zu dem Grundkörper (10) axial verschiebbar ist.

2. Rückschlagventil (100) nach Anspruch 1, bei dem der Ventilkörper (20) radial gegenüber dem Grundkörper (10) abgedichtet ist und/oder das Ventilelement (30) radial gegenüber dem Ventilkörper (20) abgedichtet ist.

3. Rückschlagventil (100) nach einem der vorstehenden Ansprüche, bei dem das Gehäuse eine, insbesondere topfartige, Haltekappe (15) mit einem Boden (17) mit einer Öffnung (18) aufweist.

4. Rückschlagventil (100) nach Anspruch 3, bei dem
das andere Vorspannelement (70) ein erstes Ende (71), das an einem die Öffnung (18) umgebenden Bereich des Bodens (17) der Haltekappe (15) abgestützt ist, und ein zweites Ende (72) aufweist, das an einer axialen Stirnfläche des Ventilkörpers (20), insbesondere eines radial nach außen vorspringenden Abschnitts (23) des Ventilkörpers (20), abgestützt ist; und/oder
bei dem die Haltekappe (15) eine Wand (16) aufweist, welche einen Abschnitt des Grundkörpers (10) radial umgibt und/oder an diesem befestigt ist; und/oder
bei dem sich ein Abschnitt des Ventilkörpers (20) durch die Öffnung (18) erstreckt.

5. Rückschlagventil (100) nach einem der vorstehenden Ansprüche, bei dem der Grundkörper (10) einen, insbesondere topfartigen, Abschnitt mit einem Grundkörperboden (12), in dem die Eingangsöffnung (11) vorgesehen ist, und/oder mit einem Wandabschnitt (13) aufweist, der einen weiteren Abschnitt des Ventilkörpers (20) radial umgibt.

6. Rückschlagventil (100) nach Anspruch 5, bei dem das weitere Vorspannelement (60) ein erstes Ende (61), das an einem die Eingangsöffnung (11) umgebenden Bereich des Grundkörperbodens (12) abgestützt ist, und ein zweites Ende (62) aufweist, das an einem die Durchgangsöffnung (31) des Ventilelements (30) umgebenden und dem Grundkörperboden (12) zugewandten Bereich des Ventilelements (30) abgestützt ist.

7. Rückschlagventil (100) nach einem der vorstehenden Ansprüche, bei dem das Vorspannelement (50) ein erstes Ende (51), das an einem Ventilteller (43) des Ventilglieds (40) abgestützt ist, und ein zweites Ende (52) aufweist, das an einem sich radial nach innen erstreckenden Abschnitt einer Innenwand des Ventilkörpers (20) abgestützt ist.

8. Rückschlagventil (100) nach einem der vorstehenden Ansprüche, bei dem das Ventilelement (30) wenigstens teilweise in einem Aufnahmeraum des Ventilkörpers (20) aufgenommen ist.

9. Rückschlagventil (100) nach dem vorstehenden Anspruch, bei dem eine Innenwand des Aufnahmeraums einen sich radial nach innen erstreckenden Abschnitt (24) aufweist, der dazu eingerichtet ist, die axiale Verschiebung des Ventilelements (30) in Richtung der Ausgangsöffnung (22) relativ zu dem Ventilkörper (20) zu begrenzen.

10. Rückschlagventil (100) nach einem der vorstehenden Ansprüche, das dazu eingerichtet ist, dass
bei bestimmungsgemäßem Gebrauch in einer Offenstellung des Rückschlagventils (100) ein Fluid sequentiell durch die Eingangsöffnung (11), die Durchgangsöffnung (31), den Durchlass (21) und die Ausgangsöffnung (22) strömt.

11. Verwendung eines Rückschlagventils (100) nach einem der vorstehenden Ansprüche in einem Fluidsystem, insbesondere eines Kraftfahrzeugs.

12. Verwendung eines Rückschlagventils (100) nach Anspruch 11, wobei das Rückschlagventil (100) in einem Fluidsystem zur Reinigung eines Sensors mittels eines Fluids verwendet wird.

## Claims

1. Check valve (100), comprising:
a housing having a main body (10), which has an inlet opening (11),
a valve body (20), which has a passage (21) having an outlet opening (22) and which is at least partly arranged in the main body (10),
a valve element (30), which is at least partly arranged in the valve body (20) for axial movement relative to the valve body (20) and which has a through-opening (31),
a valve member (40), which is arranged in the valve body (20) between the outlet opening (22) and the valve element (30) and has a sealing element (41) and a valve stem (42), which is axially movable relative to the valve body (20),
a preloading element (50), which is designed to preload the valve member (40) toward the valve element (30) with a preload force, wherein the check valve (100) also comprises:
a further preloading element (60), which is designed to preload the valve element (30) toward the valve member (40) with a further preload force, and/or
another preloading element (70), which is designed to preload the valve body (20) toward the inlet opening (11) with another preload force, wherein
the valve element (30) comprises a sealing seat (32), which surrounds the through-opening (31) and faces the sealing element (41), and
in a closed position of the check valve (100) the sealing element (41) abuts the sealing seat (32) and closes the through-opening (31),
**characterized in that**
the valve body (20) is axially movable relative to the main body (10).

2. Check valve (100) according to Claim 1, in which the valve body (20) is radially sealed to the main body (10) and/or the valve element (30) is radially sealed to the valve body (20).

3. Check valve (100) according to one of the preceding claims, in which the housing has a retaining cap (15), in particular a pot-like retaining cap, which has a bottom (17) with an opening (18).

4. Check valve (100) according to Claim 3, in which
the other preloading element (70) has a first end (71), which is supported on a region of the bottom (17) of the retaining cap (15) surrounding the opening (18), and a second end (72), which is supported on an axial front face of the valve body (20), in particular of a radially outwardly protruding portion (23) of the valve body (20); and/or
in which the retaining cap (15) has a wall (16), which radially surrounds a portion of the main body (10) and/or is fastened thereto; and/or
in which a portion of the valve body (20) extends through the opening (18).

5. Check valve (100) according to one of the preceding claims, in which the main body (10) comprises a portion, in particular a pot-like portion, having a main body bottom (12), in which the inlet opening (11) is provided, and/or having a wall portion (13), which radially surrounds a further portion of the valve body (20).

6. Check valve (100) according to Claim 5, in which the further preloading element (60) has a first end (61), which is supported on a region of the main body bottom (12) surrounding the inlet opening (11), and a second end (62), which is supported on a region of the valve element (30) surrounding the through-opening (31) of the valve element (30) and facing the main body bottom (12).

7. Check valve (100) according to one of the preceding claims, in which the preloading element (50) has a first end (51), which is supported on a valve disk (43) of the valve member (40), and a second end (52), which is supported on a radially inwardly extending portion of an inner wall of the valve body (20).

8. Check valve (100) according to one of the preceding claims, in which the valve element (30) is at least partly received in a receiving space of the valve body (20).

9. Check valve (100) according to the preceding claim, in which an inner wall of the receiving space has a radially inwardly extending portion (24), which is designed to limit the axial movement of the valve element (30) toward the outlet opening (22) relative to the valve body (20).

10. Check valve (100) according to one of the preceding claims, which is designed such that,
during normal use, with the check valve (100) in an open position a fluid flows sequentially through the inlet opening (11), the through-opening (31), the passage (21) and the outlet opening (22).

11. Use of a check valve (100) according to one of the preceding claims in a fluid system, in particular of a motor vehicle.

12. Use of a check valve (100) according to Claim 11, wherein the check valve (100) is used in a fluid system for cleaning a sensor by means of a fluid.

## Revendications

1. Clapet anti-retour (100), comportant :
un boîtier avec un corps de base (10), qui comporte une ouverture d'entrée (11),
un corps de clapet (20), qui comporte un passage (21) avec une ouverture de sortie (22) et qui est disposé au moins par endroits dans le corps de base (10),
un élément de clapet (30), disposé de manière à pouvoir coulisser axialement par rapport au corps de clapet (20) au moins par endroits dans le corps de clapet (20), avec une ouverture de passage (31),
un organe de clapet (40), disposé entre l'ouverture de sortie (22) et l'élément de clapet (30) dans le corps de clapet (20), avec un élément d'étanchéité (41) et une tige de clapet (42), qui peut être coulissée axialement par rapport au corps de clapet (20),
un élément de précontrainte (50), qui est conçu pour précontraindre l'organe de clapet (40) avec une force de contrainte en direction de l'élément de clapet (30), le clapet anti-retour (100) comportant en outre :
un élément de précontrainte supplémentaire (60), qui est conçu pour précontraindre l'élément de clapet (30) avec une force de précontrainte supplémentaire en direction de l'organe de clapet (40), et/ou
un autre élément de précontrainte (70), qui est conçu pour précontraindre le corps de clapet (20) avec une autre force de précontrainte en direction de l'ouverture d'entrée (11),
l'élément de clapet (30) comportant un siège d'étanchéité (32) entourant l'ouverture de passage (31), qui est tourné vers l'élément d'étanchéité (41), et
dans une position du clapet anti-retour (100), l'élément d'étanchéité (41) reposant sur le siège d'étanchéité (32) et fermant l'ouverture de passage (31),
**caractérisé en ce que**
le corps de clapet (20) peut être coulissé axialement par rapport au corps de base (10).

2. Clapet anti-retour (100) selon la revendication 1, où le corps de clapet (20) est étanchéifié radialement par rapport au corps de base (10) et/ou l'élément de clapet (30) est étanchéifié radialement par rapport au corps de clapet (20).

3. Clapet anti-retour (100) selon l'une des revendications précédentes, où le boîtier comporte un capuchon de retenue (15), en particulier en forme de pot, avec un fond (17) avec une ouverture (18).

4. Clapet anti-retour (100) selon la revendication 3, où
l'autre élément de précontrainte (70) comporte une première extrémité (71), qui est soutenue sur une zone, entourant l'ouverture (18), du fond (17) du capuchon de retenue (15), et une seconde extrémité (72), qui est soutenue sur une face frontale axiale du corps de clapet (20), en particulier d'une section (23), faisant saillie radialement vers l'extérieur, du corps de clapet (20) ; et/ou
où le capuchon de retenue (15) comporte une paroi (16), qui entoure radialement une section du corps de base (10) et/ou est fixée sur celle-ci ; et/ou
où une section du corps de clapet (20) s'étend à travers l'ouverture (18).

5. Clapet anti-retour (100) selon l'une des revendications précédentes, où le corps de base (10) comporte une section, en particulier en forme de pot, avec un fond de corps de base (12), dans lequel l'ouverture d'entrée (11) est prévue, et/ou avec une section de paroi (13), qui entoure radialement une section supplémentaire du corps de clapet (20).

6. Clapet anti-retour (100) selon la revendication 5, où l'élément de précontrainte supplémentaire (60) comporte une première extrémité (61), qui est soutenue sur une zone, entourant l'ouverture d'entrée (11), du fond de corps de base (12), et une seconde extrémité (62), qui est soutenue sur une zone, entourant l'ouverture de passage (31) de l'élément de clapet (30) et tournée vers le fond de corps de base (12), de l'élément de clapet (30).

7. Clapet anti-retour (100) selon l'une des revendications précédentes, où l'élément de précontrainte (50) comporte une première extrémité (51), qui est soutenue sur un disque (43) de clapet de l'organe de clapet (40), et une seconde extrémité (52), qui est soutenue sur une section, s'étendant radialement vers l'intérieur, d'une paroi intérieure du corps de clapet (20).

8. Clapet anti-retour (100) selon l'une des revendications précédentes, où l'élément de clapet (30) est logé au moins en partie dans un espace de logement du corps de clapet (20).

9. Clapet anti-retour (100) selon la revendication précédente, où une paroi intérieure de l'espace de logement comporte une section (24) s'étendant radialement vers l'intérieur, qui est conçue pour limiter le coulissement axial de l'élément de clapet (30) en direction de l'ouverture de sortie (22) par rapport au corps de clapet (20).

10. Clapet anti-retour (100) selon l'une des revendications précédentes, qui est conçu pour que dans le cas d'une utilisation selon l'usage prévu, un fluide s'écoule séquentiellement à travers l'ouverture d'entrée (11), l'ouverture de passage (31), le passage (21) et l'ouverture de sortie (22) dans une position ouverte du clapet anti-retour (100).

11. Utilisation d'un clapet anti-retour (100) selon l'une des revendications précédentes dans un système de fluide, en particulier un véhicule à moteur.

12. Utilisation d'un clapet anti-retour (100) selon la revendication 11, le clapet anti-retour (100) étant utilisé dans un système de fluide destiné à nettoyer un capteur au moyen d'un fluide.
